# EUROPEAN PATENT APPLICATION

(11) **EP 1 726 565 A1**
(43) Date of publication of application: **29.11.2006**
(21) Application number: 03777279.5
(22) Date of filing: 05.12.2003
(51) Int. Cl.: C01B 31/02, B01D 53/50

(54) **CARBON MATERIAL AND FLUE GAS TREATMENT APPARATUS**

(71) Applicant: Mitsubishi Heavy Industries, Ltd., 108-8215 Tokyo (JP)
(72) Inventor: TATSUHARA, Kiyoshi c/o MITSUBISHI HEAVY IND., LTD, Nagasaki-shi, Nagasaki 851-0392 (JP); YASUTAKE, Akinori c/o MITSUBISHI HEAVY IND., LTD, Nagasaki-shi, Nagasaki 851-0392 (JP); KOBAYASHI, Norihisa c/o MITSUBISHI HEAVY IND., LTD, Nagasaki-shi, Nagasaki 851-0392 (JP); KURISAKI, Takashi c/o MITSUBISHI HEAVY IND., LTD, Nagasaki-shi, Nagasaki 851-0392 (JP)
(74) Representative: Henkel, Feiler & Hänzel
(86) International application number: PCT/JP2003/015580
(87) International publication number: WO 2005/054126

(57) **Abstract**

A metallic material, such as chromium or iron, is added to a carbon material, such as activated carbon fibers, activated carbon, graphite, carbon nanotube, or nanocarbon. The resulting carbon material is used to remove hazardous substances (for example, sulfur contents) in an exhaust gas.

## Description

### Technical Field

This invention relates to a carbon material for rendering hazardous substances harmless, the hazardous substances being contained in exhaust gases discharged, for example, from various incinerators, such as municipal refuse incinerators, industrial waste incinerators, and sludge incinerators, melting furnaces, boilers, gas turbines, engines, etc., and also relates to an exhaust gas treatment apparatus using the carbon material.

### Background Art

The limestone gypsumprocess, designed to collect sulfur contents in exhaust gases as gypsum with the use of a limestone or slaked lime slurry as an absorber, has so far been employed as a method for removing sulfur oxides in exhaust gases. The dry adsorption process using activated carbon is known as another method.

According to the above-described limestone gypsum process, a limestone or slaked lime slurry is sprayed into an exhaust gas to perform humidification/cooling of the exhaust gas and the absorption of SOx at the same time. Thus, a large amount of the slurry needs to be circulated, and power and a large amount of water are need for circulating the slurry.

With the dry process, on the other hand, a large amount of heat is required for desorption of sulfur contents, which have been adsorbed to activated carbon, by heating. In the case of this process, moreover, discarding of the resulting dilute sulfuric acid, wear of the adsorbent, etc. pose problems. Thus, it is desired that a desulfurization device will appear which does not require an absorber of sulfur oxides or large-scale equipment, which can obtain a high concentration of sulfuric acid during desulfurization, and which produces gypsum by low power with the use of the same equipment as that employed in the limestone gypsum process.

As an apparatus for removing SOx in an exhaust gas, therefore, a proposal has beenmade for a desulfurization device which is arranged to adsorb SOx in an exhaust gas onto a porous carbon material such as activated carbon fibers, oxidize sulfur components with oxygen contained in the exhaust gas with the use of the catalytic action of the porous carbon material, and then absorb the oxidized sulfur components into water to remove the product, as sulfuric acid, from the porous carbon material (see Japanese Patent Application Laid-Open No. Hei 11-347350).

With the conventional desulfurization device using activated carbon fibers, an activated carbon fiber tank for adsorbing SOx in the exhaust gas is disposed in an adsorption column, the exhaust gas is supplied from below to oxidize SO₂ into SO₃ on the surfaces of the activated carbon fibers, and the resulting SO₃ reacts with water supplied, whereby sulfuric acid (H₂SO₄) is produced.

The amount of the exhaust gas from a boiler for combustion of a fuel such as coal or heavy oil is huge. To treat this huge amount of the exhaust gas, it is necessary to improve the efficiency of desulfurization. Mere upsizing of the adsorption column is contemplated as a measure, and activated carbon fibers capable of a high efficiency desulfurization reaction are desired as the activated carbon fibers.

The present invention has been accomplished in the light of the above-described circumstances. It is an object of the present invention to provide a carbon material capable of a highly efficient desulfurization reaction, and an exhaust gas treatment apparatus having a simple, high efficiency desulfurization device using this carbon material.

### Disclosure of the Invention

A carbon material according to the present invention, designed to solve the above problems, is a carbon material characterized by containing a metallic material or a semiconductor material added to a carbon material.

The above carbon material is a carbon material characterized in that the metallic material contains at least one of chromium, iridium, palladium, platinum, iron, cobalt, and silver.

The above carbon material is a carbon material characterized in that the carbon material is activated carbon fibers, activated carbon, graphite, a carbon nanotube, or nanocarbon.

The above carbon material is a carbon material characterized in that the metallic material is added in an amount of 1,000 ppm or less.

The above carbon material is a carbon material characterized in that the carbon material is heat-treated at 600 to 1,200°C in a non-oxidizing atmosphere, and thereby rendered hydrophobic.

The above carbon material is used for desulfurization for removing sulfur components in an exhaust gas.

An exhaust gas treatment apparatus according to the present invention, designed to solve the aforementioned problems, is an exhaust gas treatment apparatus including a catalyst layer through which an exhaust gas flows, and a water supply means for supplying water to the catalyst layer, and characterized in that the catalyst layer is composed of the above-described carbon material.

### Brief Description of the Drawings

FIG. 1 is a schematic configurational view of an exhaust gas treatment apparatus (of a sulfuric acid production type) equipped with a desulfurization device according to an embodiment of the present invention.
FIG. 2 is a schematic configurational view of an exhaust gas treatment apparatus (of a gypsum production type) equipped with a desulfurization device according to another embodiment of the present invention.
FIG. 3 is a schematic configurational view of a desulfurization device according to another embodiment.
FIG. 4 is a schematic perspective external view of a catalyst layer.

### Best Mode for Carrying Out the Invention

Embodiments according to the present invention will now be described, but the present invention is not limited to these embodiments.

Carbon materials to be described by the following embodiments contain metallic materials added to carbon materials.

As the metallic materials added, metallic elements of group 3 to group 12 on the periodic table are suitable, and metallic or semiconductor elements of group 1, group 2, or groups 13 to 16 are effective.

For example, there can be named metallic components, such as sodium (Na) or potassium (K) of group 1, calcium (Ca) of group 2, titanium (Ti) of group 4, vanadium (V) of group 5, chromium (Cr) or tungsten (W) of group 6, manganese (Mn) of group 7, iron (Fe), ruthenium (Ru) or osmium (Os) of group 8, cobalt (Co), rhodium (Rh) or iridium (Ir) of group 9, nickel (Ni), palladium (Pd) or platinum (Pt) of group 10, silver (Ag) of group 11, zinc (Zn) of group 12, and aluminum (Al) of group 13. These metallic components can be added singly or as a mixture of at least two of them.

It is recommendable that the amount of any of them added is 1,000 ppm or less, more preferably 100 ppm or less, when expressed as a concentration finally remaining in the carbon material. This is because the addition of an amount in excess of 1,000 ppm does not further enhance the effect of addition.

As the above-mentioned carbon material, there can be named, for example, carbon-based materials, such as activated carbon fibers, activated carbon, graphite, carbon nanotube, and nanocarbon.

The timing of addition of the metallic component to the carbon material is not limited. However, the addition is advisably performed, as appropriate, for example, at the stage of a carbonization precursor which is the starting material, during the step of infusibilizing the carbon material at a temperature of 330 to 550°C for carbonization, during the step of activating the carbide (heat-treating it at 750°C or higher in the case of steam activation, or at 850°C or higher in the case of carbon dioxide activation) to form pores, during the step of calcining (600 to 1,200°C) the activated carbide, or during the step of heat treatment at a low temperature (about 150 to 200°C) in processing the carbon material to form a sheet, for example, in forming the carbon material into a rectangular or honeycomb shape by heat fusion.

Examples of the method for adding the metallic component to the carbon material are impregnation with the metallic material as a solution, spraying with a metal powder, calcination together with a bulk (solids) of a metal or metal compound during heat treatment, and preparation of a material constituting parts of a container or a furnace with the use of a metal to be added, followed by transfer of the metal into the carbon material during heat treatment.

To activate activated carbon fibers among the above-mentioned carbon materials, it is recommendable to heat-treat the fibers at 600 to 1,200°C in a non-oxidizing atmosphere, thereby rendering the fibers hydrophobic.

The lower the calcination temperature, the lower the cost of the apparatus and the running cost can be made. At 600°C or lower, however, no increase in the active sites is noted. This is not preferred.

Examples of the activated carbon fibers to be used in the following embodiments, and their production examples will be shown below.

As the activated carbon fibers to be used in the following embodiments, there can be named, for example, pitch-based activated carbon fibers, polyacrylonitrile-based activated carbon fibers, phenol-based activated carbon fibers, and cellulose-based activated carbon fibers. However, there are no limitations on any activated carbon fibers, as long as they show the aforementioned catalytic action.

Concrete embodiments will be shown below. In the following embodiments, activated carbon fibers A to C containing different types of carbon were used as the carbon materials.

### <Embodiment 1>

Activated carbon fibers A (2 g) were sprinkled with a powder of a reagent (CrNH₄(SO₄)₂) containing 40 mg of Cr, and calcined for 20 hours at a temperature of 1, 100°C in an atmosphere of nitrogen.

### <Embodiment 2>

Activated carbon fibers A (2 g) were sprayed, at the center thereof, with 2 mL of an aqueous solution of a reagent (CrNH₄(SO₄)₂) containing 40 mg of Cr, and then calcined for 20 hours at a temperature of 1, 100°C in an atmosphere of nitrogen.

### <Embodiment 3>

Activated carbon fibers A (2 g) were immersed in 40 mL of an aqueous solution of a reagent (CrNH₄(SO₄)₂) containing 40 mg of Cr, and then calcined for 20 hours at a temperature of 1,100°C in an atmosphere of nitrogen. The immersion was performed for 3 hours at 60°C.

### <Embodiment 4>

Activated carbon fibers A (2 g) were sprayed, at the center thereof, with 2 mL of an aqueous solution of a reagent (Cr(C₂H₃O₂)₃) containing 40 mg of Cr, and then calcined for 20 hours at a temperature of 1,100°C in an atmosphere of nitrogen.

### <Embodiment 5>

Activated carbon fibers of a different type, i.e., activated carbon fibers B (2 g), were immersed in 40 mL of an aqueous solution of a reagent (CrNH₄(SO₄)₂) containing 40 mg of Cr, and then calcined for 20 hours at a temperature of 1, 100°C in an atmosphere of nitrogen. The immersion was performed for 3 hours at 60°C.

The desulfurization activities of the catalysts comprising activated carbon fibers, which were prepared by the above-described methods, were evaluated using a glass reaction tube. The conditions were as follows: reaction temperature: 50°C, amount of the catalyst: 0.2 g, amount of the gas treated: 200 mL N/min, inlet SO₂ concentration: 1,000 ppm, oxygen concentration: 4%, water concentration: corresponding to 13%, and the balance: nitrogen.

The results of evaluation of the desulfurization activities in Embodiments 1 to 5 are shown in Table 1. <Table 1>

| | | Carbon material | Metallic component | Method of addition | Desulfurization rate (%) |
|---|---|---|---|---|---|
| Embodiment | 1 | Activated carbon fibers A | Cr | Powder addition | 60.6 |
| | 2 | Activated carbon fibers A | Cr | Spraying | 88.7 |
| | 3 | Activated carbon fibers A | Cr | Immersion | 94.9 |
| | 4 | Activated carbon fibers A | Cr | Spraying | 72.2 |
| | 5 | Activated carbon fibers B | Cr | Immersion | 87.1 |
| Comp. | 1 | Activated carbon fibers A | None | - | 29.2 |

As shown in Table 1, the activated carbon fibers incorporating Cr as a metallic component (desulfurization rate: 60.6% to 94.9%) dramatically increased the desulfurization efficiency by 2 or more times as compared with the activated carbon fibers containing no metallic component (desulfurization rate: 29.2%).

The activated carbon fibers immersed in the metallic component Cr according to Embodiment 3, in particular, achieved a desulfurization rate of higher than 90%. This is because the immersion method according to Embodiment 3 renders the distribution of Cr uniform in comparison with spraying with the metallic component in the metallic state. Comp. in Table 1 refers to a comparative example.

Next, activated carbon fibers C of a type different from the types of the activated carbon fibers used in Embodiments 1 to 5 were used, and the desulfurization rate was investigated when other metals than Cr were added.

### <Embodiment 6>

Activated carbon fibers C (2 g) were immersed in 40 mL of an aqueous solution of a reagent (CrNH₄(SO₄)₂) containing 40 mg of Cr, and then calcined for 20 hours at a temperature of 1,100°C in an atmosphere of nitrogen. The immersion was performed for 3 hours at 60°C (the same held for the following Embodiments 7 to 15).

### <Embodiment 7>

Activated carbon fibers C (2 g) were immersed in 40 mL of an aqueous solution of a reagent (FeOH(C₃COO)₂) containing 40 mg of Fe, and then calcined for 20 hours at a temperature of 1,100°C in an atmosphere of nitrogen.

### <Embodiment 8>

Activated carbon fibers C (2 g) were immersed in 40 mL of an aqueous solution of a reagent (Ag(C₃COO)) containing 40 mg of Ag, and then calcined for 20 hours at a temperature of 1,100°C in an atmosphere of nitrogen.

### <Embodiment 9>

Activated carbon fibers C (2 g) were immersed in 40 mL of an aqueous solution of a reagent (H₂PtCl₆·6H₂O) containing 40 mg of Pt, and then calcined for 20 hours at a temperature of 1,100°C in an atmosphere of nitrogen.

### <Embodiment 10>

Activated carbon fibers C (2 g) were immersed in 40 mL of an ethanol solution of a reagent (H₂PtCl₆·6H₂O) containing 40 mg of Pt, and then calcined for 20 hours at a temperature of 1,100°C in an atmosphere of nitrogen.

### <Embodiment 11>

Activated carbon fibers C (2 g) were immersed in 40 mL of an aqueous solution of a reagent (H₂(IrCl₆·6H₂O) containing 40 mg of Ir, and then calcined for 20 hours at a temperature of 1,100°C in an atmosphere of nitrogen.

### <Embodiment 12>

Activated carbon fibers C (2 g) were immersed in 40 mL of an ethanol solution of a reagent (H₂(IrCl₆·6H₂O) containing 40 mg of Ir, and then calcined for 20 hours at a temperature of 1,100°C in an atmosphere of nitrogen.

### <Embodiment 13>

Activated carbon fibers C (2 g) were immersed in 40 mL of an aqueous solution of a reagent (Pd(NH₃)Cl₂·6H₂O) containing 40 mg of Pd, and then calcined for 20 hours at a temperature of 1,100°C in an atmosphere of nitrogen.

### <Embodiment 14>

Activated carbon fibers C (2 g) were immersed in 40 mL of an aqueous solution of a reagent (Mn(C₃COO)₂·4H₂O) containing 40 mg of Mn, and then calcined for 20 hours at a temperature of 1,100°C in an atmosphere of nitrogen.

### <Embodiment 15>

Activated carbon fibers C (2 g) were immersed in 40 mL of an aqueous solution of a reagent (Ni (C₃COO)₂·4H₂O) containing 40 mg of Ni, and then calcined for 20 hours at a temperature of 1,100°C in an atmosphere of nitrogen.

The results of evaluation of the desulfurization activities in Embodiments 6 to 15 are shown in Table 2.

**<Table 2>**

| | | Carbon material | Metallic component | Method of addition | Desulfurization rate (%) |
|---|---|---|---|---|---|
| Embodiment | 6 | Activated carbon fibers C | Cr | Immersion | 71.8 |
| | 7 | Activated carbon fibers C | Fe | Immersion | 24.1 |
| | 8 | Activated carbon fibers C | Ag | Immersion | 40.0 |
| | 9 | Activated carbon fibers C | Pt | Immersion | 22.5 |
| | 10 | Activated carbon fibers C | Pt | Immersion | 41.7 |
| | 11 | Activated carbon fibers C | Ir | Immersion | 56.9 |
| | 12 | Activated carbon fibers C | Ir | Immersion | 52.6 |
| | 13 | Activated carbon fibers C | Pd | Immersion | 26.3 |
| | 14 | Activated carbon fibers C | Mn | Immersion | 16.2 |
| | 15 | Activated carbon fibers C | Ni | Immersion | 47.0 |
| Comp. | 2 | Activated carbon fibers C | None | - | 13.0 |

As shown in Table 2, the activated carbon fibers incorporating Fe, Ag, Pt, Ir, Pd or Ni, although not Cr, as the metallic component dramatically increased the desulfurization efficiency by nearly 2 times or more than 2 times as compared with the activated carbon fibers containing no metallic component (desulfurization rate: 13%). The activated carbon fibers incorporating Mn as the metallic component also increased the desulfurization efficiency as compared with the activated carbon fibers containing no metallic component. Comp. in Table 2 refers to a comparative example.

Next, the desulfurization rate was investigated when the proportion of Ir added as the metallic component was varied.

### <Embodiment 16>

The same procedure as in Embodiment 11 was performed, except that the proportion of Ir supported on the carrier (i.e., metal content, %) was changed to 1% by weight.

### <Embodiment 17>

The same procedure as in Embodiment 11 was performed, except that the proportion of Ir supported on the carrier (i.e., metal content, %) was changed to 0.5% by weight.

### <Embodiment 18>

The same procedure as in Embodiment 11 was performed, except that the proportion of Ir supported on the carrier (i.e., metal content, %) was changed to 0.1% by weight.

The results of evaluation of the desulfurization activities in Embodiments 16 to 18 are shown in Table 3.

**<Table 3>**

| | | Carbon material | Metallic component | Proportion added | Method of addition | Desulfurization rate (%) |
|---|---|---|---|---|---|---|
| Embodiment | 11 | Activated carbon fibers C | Ir | 2 wt.% | Immersion | 56.9 |
| | 16 | Activated carbon fibers C | Ir | 1 wt.% | Immersion | 55.8 |
| | 17 | Activated carbon fibers C | Ir | 0.5 wt.% | Immersion | 86.8 |
| | 18 | Activated carbon fibers C | Ir | 0.1 wt.% | Immersion | 10.3 |

As shown in Table 3, the outcome was particularly preferred when the proportion of Ir added was 0.5% by weight.

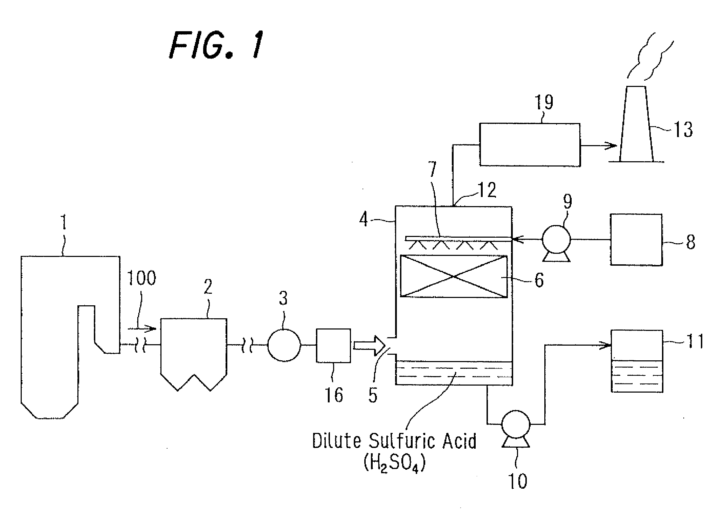

An exhaust gas treatment apparatus equipped with a desulfurization device using the above-described activated carbon fibers incorporating the metallic component will be described based on FIG. 1.

The exhaust gas treatment apparatus of FIG. 1 is adapted to withdraw sulfur oxides in an exhaust gas as sulfuric acid by the desulfurization function of the desulfurization device. As shown in FIG. 1, the exhaust gas treatment apparatus comprises a boiler 1 for generating steam for driving a steam turbine; a dust collector 2 for removing dust in an exhaust gas 100 from the boiler 1; a forced draft fan 3 for supplying the dedusted exhaust gas into a desulfurization column 4 (desulfurization device); a humidifying/cooling device 16 for cooling and humidifying the exhaust gas 100 at a stage before supply to the desulfurization column 4 (or in the column); the desulfurization column 4 (desulfurization device) where the exhaust gas 100 supplied through an inlet 5 in a side wall of a lower portion of the column is passed through a catalyst layer 6 disposed inside, and water is supplied by a spray nozzle 7 from above the catalyst layer 6 to perform a desulfurization reaction, thereby with drawing SOx in the exhaust gas as dilute sulfuric acid (H₂SO₄); a smokestack 13 for discharging a desulfurized and cleaned exhaust gas from an outlet 12 at the top of the desulfurization column 4 to the outside; and a sulfuric acid tank 11 for storing dilute sulfuric acid which has been withdrawn from the desulfurization column 4 via a discharge pump 10. Where necessary, a mist eliminator 19 may be interposed in the line for discharging the cleaned exhaust gas discharged from the desulfurization column 4, thereby separating water in the exhaust gas.

In the boiler 1, a fuel such as coal or heavy oil is burned in the furnace, for example, to generate steam for driving a steam turbine of thermal power generating equipment (not shown). Sulfur oxides (SOx) are contained in the exhaust gas of the boiler 1, and the exhaust gas is denitrated by a denitration device (not shown), cooled by a gas heater, and dedusted by the dust collector 2.

The dedusted exhaust gas is introduced by the forced draft fan 3 into the desulfurization column 4 through the inlet 5 provided in the lower side wall of the desulfurization column 4. The catalyst layer 6 formed of an activated carbon fiber layer is disposed within the desulfurization column 4, and the catalyst layer 6 is supplied with water for sulfuric acid production from the spray nozzle 7. Water is supplied from above and, also, the exhaust gas is passed through the interior of the catalyst layer 6 from below the catalyst layer 6, whereby SOx is removed from the exhaust gas by reaction. The exhaust gas that has passed through the interior of the catalyst layer 6 is discharged through the outlet 12, and released into the atmosphere through the smokestack 13.

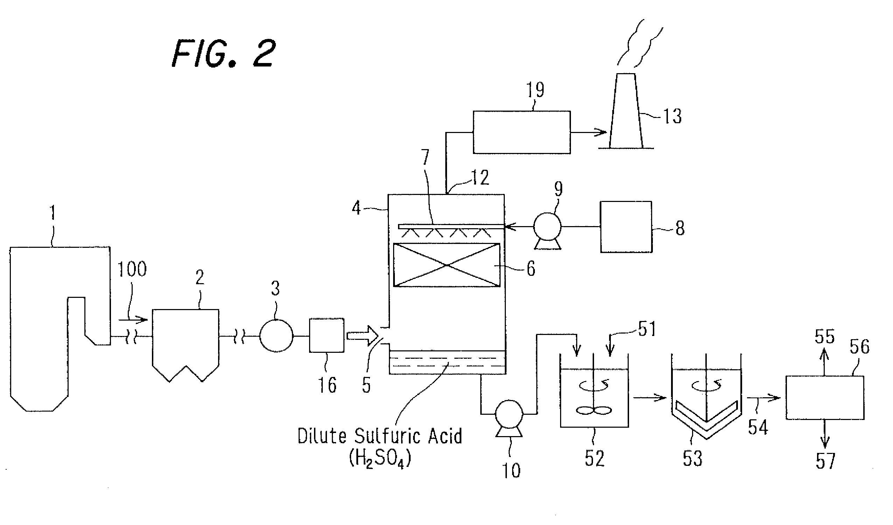

Next, an example of another exhaust gas treatment apparatus will be shown in FIG. 2. The exhaust gas treatment apparatus of FIG. 2 is adapted to withdraw sulfur oxides in an exhaust gas as sulfuric acid by the desulfurization function of the desulfurization device, and supply a lime slurry to the sulfuric acid to produce gypsum.

As shown in FIG. 2, the exhaust gas treatment apparatus comprises a boiler 1 for generating steam for driving a steam turbine; a dust collector 2 for removing dust in an exhaust gas 100 from the boiler 1; a forced draft fan 3 for supplying the dedusted exhaust gas into a desulfurization column 4 (desulfurization device); a humidifying/cooling device 16 for cooling and humidifying the exhaust gas 100 in a stage before supply to the desulfurization column 4 (or in the column); the desulfurization column 4 (desulfurization device) where the exhaust gas 100 supplied through an inlet 5 in a side wall of a lower portion of the column is passed through a catalyst layer 6 disposed inside, and water is supplied by a spray nozzle 7 from above the catalyst layer 6 to perform a desulfurization reaction, thereby withdrawing SOx in the exhaust gas as dilute sulfuric acid (H₂SO₄); a smokestack 13 for discharging the desulfurized and cleaned exhaust gas from an outlet 12 at the top of the desulfurization column 4 to the outside; a gypsum reaction tank 52 for storing dilute sulfuric acid withdrawn from the desulfurization column 4 via a discharge pump 10, and being supplied with a lime slurry 51 to precipitate gypsum; a settling tank (thickener) 53 for settling gypsum; and a dehydrator 56 for removing water, as drain (filtrate) 57, from a gypsum slurry 54 to obtain gypsum 55.

The exhaust gas treatment apparatus of FIG. 1 is an apparatus configured to desulfurize the exhaust gas, and withdraw the resulting sulfuric acid as sulfuric acid. The exhaust gas treatment apparatus of FIG. 2 is an apparatus configured to supply the lime slurry 51 to sulfuric acid to obtain the gypsum slurry 54, and then dehydrate the gypsum slurry 54 for its withdrawal as gypsum.

### <Configuration of the desulfurization device>

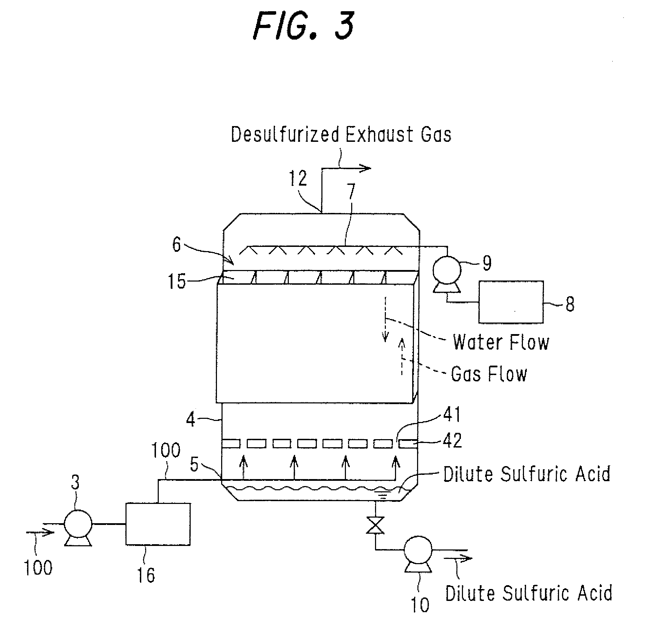

As shown in FIG. 3, the desulfurization device has the inlet 5 for the exhaust gas 100 containing sulfur oxides in a side wall (or a lower portion) of the desulfurization column 4, and is provided with the spray nozzle 7, which is a feeder of water for production of sulfuric acid, above the catalyst layer 6 provided within the desulfurization column 4 and comprising an activated carbon fiber layer. In the desulfurization device, moreover, a straightening plate 42 having distribution holes 41 for straightening the supplied exhaust gas 100 is disposed upstream, in the exhaust gas flowing direction, of the catalyst layer 6.

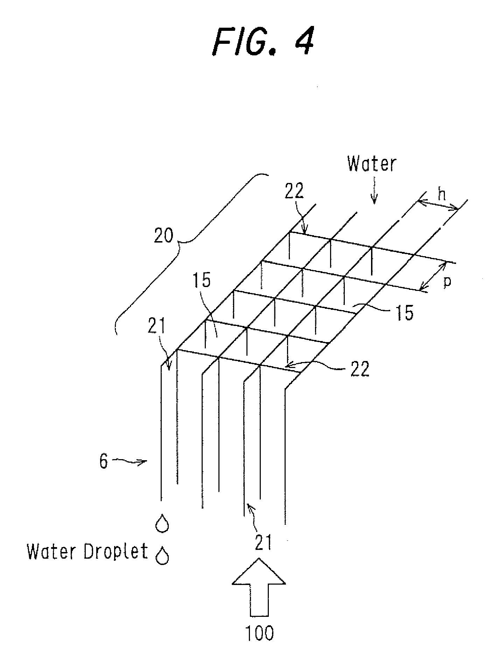

FIG. 4 is a schematic perspective external view of the catalyst layer 6. As shown in FIG. 4, an activated carbon fiber layer 20, which forms one unit of the catalyst layer 6, is constructed of flat activated carbon fiber sheets 21 of a flat form arranged parallel, and partitioning activated carbon fiber sheets 22 for partitioning spaces formed by the sheets 21 into a plurality of sections. A plurality of spaces defined by the sheets 21 and 22 and forming a lattice pattern extend vertically to define a plurality of passages 15 of a rectangular cross-sectional shape.

FIG. 3 shows the activated carbon fiber layer 6 in a single-layered state. However, this is a schematic representation and, actually, the activated carbon fiber layer 6 is formed of a plurality of layers, as shown in FIG. 4.

In FIG. 4, the distance between the adjacent flat activated carbon fiber sheets 21 and 21 is h, and the distance between the adjacent partitioning activated carbon fiber sheets 22 and 22 is p, so that the passages 15 in the lattice pattern are each of a rectangular cross-sectional shape having one side h and the other side p.

Water is supplied, as a spray, from the spray nozzle 7 to the catalyst layer 6 and, also, the exhaust gas 100 is fed from below the catalyst layer 6. Water, which has passed through the activated carbon fiber layer 20, drops to the bottom portion within the desulfurization column 4, with the water turning into particles with particle sizes of the order of several millimeters. The exhaust gas 100 flows through the relatively large passages 15 formed by the flat activated carbon fiber sheets 21 and the partitioning activated carbon fiber sheets 22. Thus, increases in its pressure loss are curtailed.

Furthermore, it is permissible to provide a furnace having a reducing atmosphere within the desulfurization column 4, and calcine the carbon fibers constituting the catalyst layer 6 at a temperature of 1, 100°C or lower in the reducing atmosphere, thereby regenerating the catalyst layer 6.

### Industrial Applicability

According to the present invention, as described above, the metallic component, such as chromium, is added to the activated carbon fibers as the carbon material. Thus, the resulting carbon material has satisfactory catalytic activity, and is preferred, for example, when used as a catalyst material for a desulfurization device.

## Claims

1. A carbon material **characterized by** containing a metallic material or a semiconductor material added to a carbon material.

2. The carbon material according to claim 1, **characterized in that** the metallic material contains at least one of chromium, iridium, palladium, platinum, iron, cobalt, and silver.

3. The carbon material according to claim 1 or 2, **characterized in that** the carbon material is activated carbon fibers, activated carbon, graphite, a carbon nanotube, or nanocarbon.

4. The carbon material according to any one of claims 1 to 3, **characterized in that** the metallic material is added in an amount of 1, 000 ppm or less.

5. The carbon material according to any one of claims 1 to 4, **characterized in that** the carbon material is heat-treated at 600 to 1,200°C in a non-oxidizing atmosphere, and thereby rendered hydrophobic.

6. The carbon material according to any one of claims 1 to 5, which is used for desulfurization for removing sulfur components in an exhaust gas.

7. An exhaust gas treatment apparatus including a catalyst layer through which an exhaust gas flows, and water supply means for supplying water to the catalyst layer, and
**characterized in that** the catalyst layer is composed of the carbon material of any one of claims 1 to 6.
